# EUROPEAN PATENT APPLICATION

(11) **EP 3 608 893 A1**
(43) Date of publication of application: **12.02.2020**
(21) Application number: 18212919.7
(22) Date of filing: 17.12.2018
(51) Int. Cl.: G08G 1/0967, G08G 1/16

(54) **COOPERATIVE VEHICLE SAFETY SYSTEM AND METHOD**

(30) Priority: 08.08.2018 TW 10727661
(71) Applicant: Industrial Technology Research Institute, 31040 Hsinchu (TW)
(72) Inventor: Hwu, Jing-Shyang, 302 Hsinchu County (TW); Tu, Ming-Ta, 220 New Taipei City (TW); Liu, Ssu-Yu, 351 Miaoli County (TW); Tsai, Ping-Ta, 813 Kaohsiung City (TW); Sun, Min-Te, 300 Hsinchu City (TW); Tseng, Wei-Ting, 976 Hualien County (TW)
(74) Representative: Krauns, Christian

(57) **Abstract**

A cooperative vehicle safety method is provided. The cooperative vehicle safety method includes: collecting a local map information, a local traffic sign information, and a state information of an object received from at least one sensing unit by a roadside unit; optimizing the received state information of the object; predicting a moving direction of the object according to the optimized state information of the object, a plurality of history driving traces of the object, a plurality of vehicle driving trace patterns, the local map information, and the local traffic sign information; and determining whether to send an alert according to the predicted moving direction of the object.

## Description

### BACKGROUND OF THE INVENTION

### Field of the Invention

The invention relates in general to a cooperative vehicle safety system and method.

### Description of the Related Art

Along with the advance in technology, vehicle safety has gained more and more improvement. For example, the vehicle safety system using vehicle to vehicle (V2V) communication has become a practical and popular technology. Examples of vehicle safety system include the intersection movement assist (IMA) system, the emergency electronic brake lights (EEBL) system, the left turn assistant (LTA) system, and the forward collision alert (FCW) system.

Additionally, the advanced driver assistance system (ADAS) and the cooperative vehicle safety system depend on accurate instant state information of the vehicle. The above vehicle safety systems may be combined with the electronic map information or the wireless communication information to assist the driver about potential or instant dangers and send an alert to warn the driver of the potential or instant dangers, so that traffic accidents may be avoided and transport safety may be improved.

However, it would be annoying to the driver if false alerts are frequently received from the vehicle safety system.

Therefore, the current cooperative vehicle safety needs to be improved further.

### SUMMARY OF THE INVENTION

The embodiment of the present disclosure provides a cooperative vehicle safety system and a cooperative vehicle safety method, which combine, such as local map information and local traffic sign information, to provide instant reliable safety/alert messages that meet local needs through data collection and machine learning.

According to one embodiment of the present disclosure, a cooperative vehicle safety method is provided. The cooperative vehicle safety method includes: collecting a local map information, a local traffic sign information, and a state information of an object received from at least one sensing unit by a roadside unit; optimizing the received state information of the object; predicting a moving direction of the object according to the optimized state information of the object, a plurality of history driving traces of the object, a plurality of vehicle driving trace patterns, the local map information, and the local traffic sign information; and determining whether to send an alert according to the predicted moving direction of the object.

According to another embodiment of the present disclosure, a cooperative vehicle safety system is provided. The cooperative vehicle safety system includes: at least one sensing unit and a roadside unit. The at least one sensing unit is configured to sense an object to generate a state information of an object. The roadside unit is configured to communicate with the at least one sensing unit to collect a local map information, a local traffic sign information, and the state information of the object received from the at least one sensing unit. The roadside unit predicts a moving direction of the object according to an optimized state information of the object, a plurality of history driving traces of the object, a plurality of vehicle driving trace patterns, the local map information, and the local traffic sign information. The roadside unit determines whether to send an alert according to the predicted moving direction of the object.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a functional block diagram of a cooperative vehicle safety system according to an embodiment of the present disclosure.
FIG. 2A is a flowchart of a cooperative vehicle safety method according to an embodiment of the present disclosure.
FIG. 2B is an example of an optimization process according to an embodiment of the present disclosure.
FIG. 2C is an example of a machine learning algorithm according to an embodiment of the present disclosure.
FIG. 3A to FIG. 3C are exemplary situation example diagrams according to an embodiment of the present disclosure.
FIG. 4 is a functional block diagram of a roadside unit 120 according to an embodiment of the present disclosure.

### DETAILED DESCRIPTION OF THE INVENTION

Technical terms are used in the specification with reference to generally-known terminologies used in the technology field. For any terms described or defined in the specification, the descriptions and definitions in the specification shall prevail. Each embodiment of the present disclosure has one or more technical characteristics. Given that each embodiment is implementable, a person ordinarily skilled in the art can selectively implement or combine some or all of the technical characteristics of any embodiment of the present disclosure.

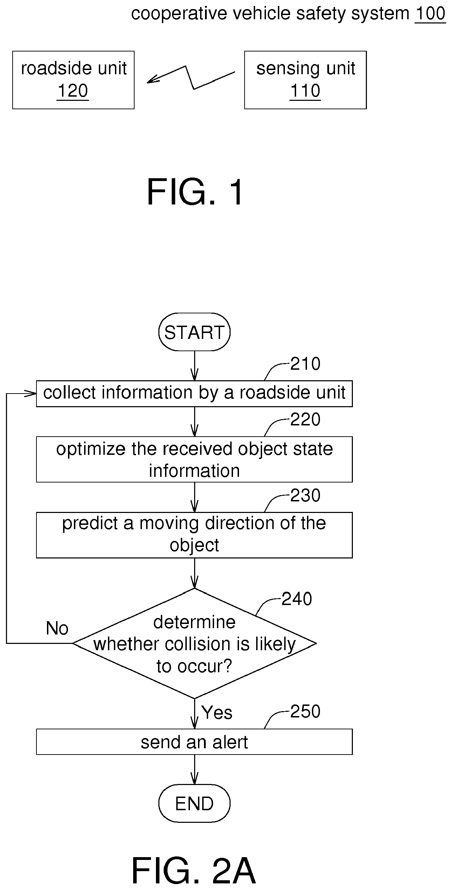

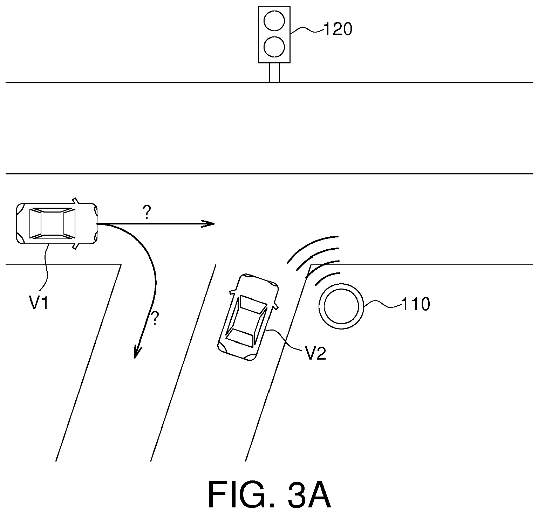

FIG. 1 is a functional block diagram of a cooperative vehicle safety system according to an embodiment of the present disclosure. FIG. 2A is a flowchart of a cooperative vehicle safety method according to an embodiment of the present disclosure. FIG. 3A to FIG. 3C are exemplary situation example diagrams according to an embodiment of the present disclosure.

The cooperative vehicle safety system 100 according to an embodiment of the present disclosure at least includes a sensing unit 110 and a roadside unit (RSU) 120. The sensing unit 110 and the roadside unit 120 may be integrated in the same device. Or, the sensing unit 110 and the roadside unit 120 may couple or communicate with each other via wired or wireless connection. Although only one sensing unit 110 is illustrated in FIG. 1, the present disclosure is not limited thereto. In other possible embodiments of the present disclosure, the cooperative vehicle safety system 100 may include multiple sensing units 110, and the said arrangement is still within the spirit of the present disclosure.

The sensing unit 110 is configured to sense an object (such as but not limited to a vehicle) on the road. The object state information includes a relative position of the object, and/or a speed of the object, and/or a moving direction of the object (such as the direction of the front end of the vehicle), but is not limited thereto. Here, the relative position of the object refers to the position of the object with respect to the sensing unit 110. That is, the relative position of the object refers the coordinates of the object using the sensing unit 110 as the original point.

The sensing unit 110 may be realized by such as but not limited to a radar or a lidar or other similar product. The sensing unit 110 transmits the sensed object state information to the roadside unit 120. The communication method between the sensing unit 110 and the roadside unit 120 is not specified here.

The roadside unit 120 receives the object state information from the sensing unit 110. The roadside unit 120 may convert the relative position of the object received from the sensing unit 110 into a set of earth coordinates. Here, the earth coordinates are designated by such as but not limited to latitudes and longitudes. Besides, the roadside unit 120 may further receive a "local map information", which includes but is not limited to a local road information (for example, whether vehicles are allowed to turn left from the inner lane or turn right from the outer lane, and the number of lanes). The local map information may be transmitted to the roadside unit 120 by the server (not illustrated) or the local map information may be built in the roadside unit 120. Also, the roadside unit 120 may receive a local traffic sign information (such as but not limited to the local traffic sign phase information and/or the local traffic sign timing information).

Refer to FIG. 2A. In step 210, the roadside unit 120 collects information. As disclosed above, the roadside unit 120 collects the object state information received from the sensing unit 110, local map information and/or local traffic sign information. The roadside unit 120 converts the relative position of the object into a set of earth coordinates of the object.

In step 220, the received object state information is optimized. In the embodiment of the present disclosure, optimization includes data smoothing, data correction and noise filtering. Under the circumstance that the sensing unit 110 being used is highly sensitive, if the object traces information received from the sensing unit 110 is not optimized, the detected vehicle moving traces could be non-linear (or even zigzagged) under the high resolution of the highly sensitive sensing unit 110. If the object state information is not optimized, the roadside unit 120 may be severely affected when making determination or prediction.

Furthermore, the noise filtering part of the embodiment of the present disclosure may be used to filtering erroneous determination made due to the detection method of the sensing unit 110 and the noise. For example, erroneous determination due to the wobbling of the road trees may be filtered.

Therefore, in the embodiment of the present disclosure, the roadside unit 120 smooths data, corrects data and filters the received object state information, such that prediction can be made earlier and more accurately.

Besides, in the embodiment of the present disclosure, the roadside unit 120 has noise filtering function. For example, suppose a vehicle driving on the road equipped with a vehicle system which emits a vehicle data (such as the speed and the current position of the vehicle) to the roadside unit 120. Then, the sensing unit 110, after scanning the vehicle, transmits the object state information of the vehicle to the roadside unit 120. Then, the roadside unit 120, after comparing the received vehicle data with a plurality of object state information received from the sensing unit 110, identifies which of the object state information received from the sensing unit 110 matches the vehicle data received from the vehicle equipped with the vehicle system, and further filters the identified data to void double information collection from the same vehicle. Thus, prediction accuracy is increased.

Suppose a particular intersection allows left turn. When a vehicle approaches the intersection, the vehicle may change to the left lane for the convenience of making a left turn at the intersection. Through collection of a large volume of vehicle driving traces and machine learning, the cooperative vehicle safety method of the present disclosure can learn respective vehicle driving trace pattern of the right-turning vehicle, the left-turning vehicle and the straight vehicle (that is, a plurality of vehicle driving trace patterns of a plurality of vehicles within the sensing range can be learned). The vehicle driving trace patterns obtained from machine learning are provided to the roadside unit 120.

In the possible embodiments of the present disclosure, data smoothing, data correction, noise filtering (data smoothing, data correction, noise filtering can collectively be referred as "optimization computation") and machine learning may be performed by the roadside unit 120, the vehicle system of a vehicle or the server at a remote end. The results of optimization computation and machine learning are transmitted to the roadside unit 120.

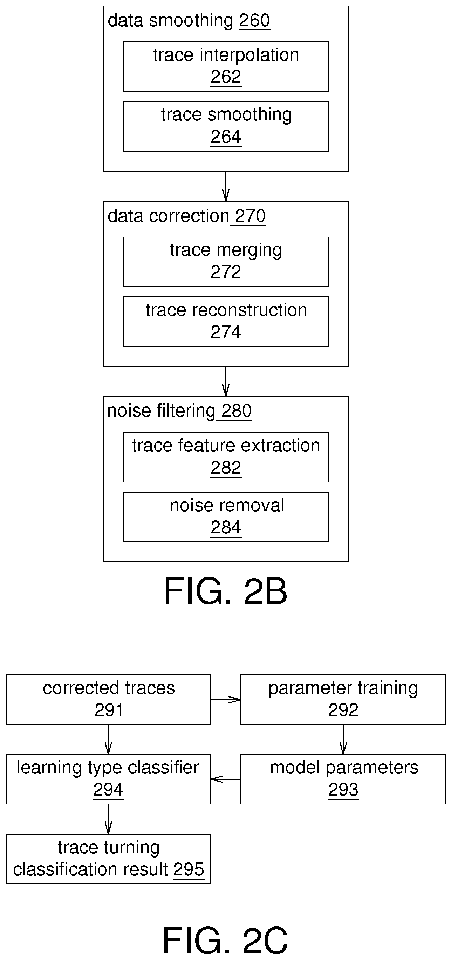

FIG. 2B is an example of an optimization process according to an embodiment of the present disclosure. As indicated in FIG. 2B, the optimization process of the embodiment of the present disclosure includes a data smoothing step 260, a data correction step 270 and a noise filtering step 280. The data smoothing step 260 includes trace interpolation sub-step 262 and trace smoothing sub-step 264. data correction step 270 includes a trace merging sub-step 272 and a trace reconstruction sub-step 274. The noise filtering step 280 includes a trace feature extraction sub-step 282 and a noise removal sub-step 284.

FIG. 2C is an example of a machine learning algorithm according to an embodiment of the present disclosure. As indicated in FIG. 2C, the machine learning algorithm of the embodiment of the present disclosure includes inputting the corrected (optimized) traces obtained from the trace correction step 291 into the parameter training step 292 and the learning type classifier 294. The model parameters 293 are obtained after the parameter training step 292 is performed. Then, the model parameters 293 are inputted to the learning type classifier 294, which generates a trace turning classification result 295.

In step 230, the moving direction of the object is predicted according to a plurality of optimized object state information, a plurality of history driving traces of the object, a plurality of vehicle driving trace patterns, the local map information and/or the local traffic sign information.

In the embodiment of the present disclosure, the local map information and the local traffic sign information are combined so that the moving direction of the vehicle may be predicted more accurately.

In the embodiment of the present disclosure, if prediction is merely based on the result of single point detection of the object generated by the sensing unit 110 instead of the history driving traces of the object, erroneous determination may be made. Therefore, in the embodiment of the present disclosure, the moving direction of the vehicle is predicted according to the history driving traces of the object, so that prediction accuracy may be increased.

In step 240, whether collision is likely to occur is determined according to the predicted moving direction of the object. If collision may possibly occur, then the method proceeds step 250 in which an alert is sent. If collision is unlikely to occur, then the method returns to step 210.

Refer to FIG. 3A to FIG. 3C. As indicated in FIG. 3A, the sensing unit 110 transmits an object state information of a vehicle V1 to the roadside unit 120 and thus the roadside unit 120 predicts whether the vehicle V1 and the vehicle V2 may collide with each other (that is, the roadside unit 120 predicts whether vehicle V1 will go straight or turn right).

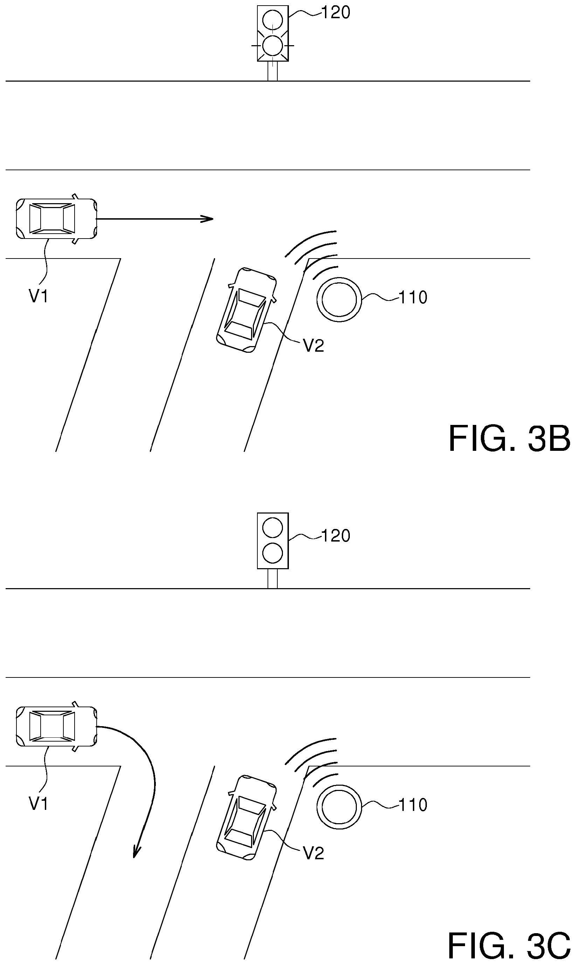

Refer to FIG. 3B. If the roadside unit 120 predicts that the vehicle V1 and the vehicle V2 are likely to collide with each other (that is, if the roadside unit 120 predicts that the vehicle V1 will go straight, then the vehicle V1 and the vehicle V2 may collide with each other), then the roadside unit 120 sends an alert (illustratively but not restrictively, the roadside unit 120 sends an alert sound or an alert color) to warn the driver of the vehicle V2. The driver of the vehicle V2, after receiving the alert, will be more vigilant of the oncoming vehicles from other directions to avoid collision.

Refer to FIG. 3C. If the roadside unit 120 predicts that the vehicles V1 and V2 are unlikely to collide (that is, if the roadside unit 120 predicts that the vehicle V1 will turn right, then the vehicles V1 and V2 will not collide with each other), then the roadside unit 120 does not send any alert (illustratively but not restrictively, the roadside unit 120 displays a green light).

In the embodiment of the present disclosure, the cooperative vehicle safety system, through information collection and machine learning, may learn the trace pattern of the vehicle going straight and the trace pattern of the vehicle making a turn. After comparing the learned trace pattern with the object state information, the cooperative vehicle safety system can predict the moving direction of the object more accurately.

In the embodiment of the present disclosure, the local traffic sign information, the local map information and the history driving traces are received and provided by the roadside unit 120.

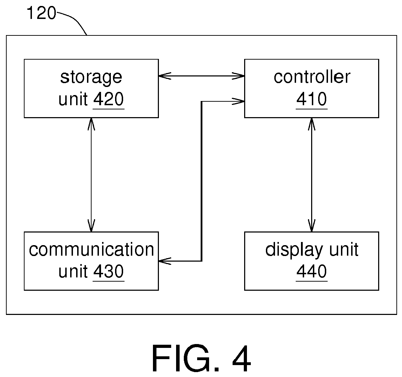

FIG. 4 is a functional block diagram of a roadside unit 120 according to an embodiment of the present disclosure. The roadside unit 120 includes a controller 410, a storage unit 420, a communication unit 430 and a display unit 440.

The controller 410 is configured to control the operations of the storage unit 420, the communication unit 430 and the display unit 440.

The storage unit 420 is configured to store the object state information, the local map information and/or the local traffic sign information received from the sensing unit 110.

The communication unit 430 is configured to communicate with the sensing unit 110.

The display unit 440 is configured to display an alert. In other possible embodiments of the present disclosure, the display unit 440 can be independent of the roadside unit 120, and the said arrangement is still within the spirit of the present disclosure.

Principles of the operation of the controller 410 are the same as above disclosure (for example, the controller 410 can perform the steps of FIG. 2A directly or through other elements), and are not repeated here.

The embodiment of the present disclosure also relates to the determination of the history driving traces of the object. Since the roadside unit 120 includes the storage unit 420 or has communication function, the roadside unit 120 can transmit the received data to the clouds or analyze the received data directly. The data stored in the roadside unit 120 includes the data sensed by the sensing unit 110 and the local traffic sign information. The data sensed by the sensing unit 110 can be processed with point-to-point restoration according to time and object number to obtain a plurality of traces (points) of each vehicle (object). A plurality of "history driving traces of the object" refer to a plurality of "traces (lines)" restored from a plurality of "traces (points)" of each vehicle (object). That is, a plurality of "history driving traces of the object" of each vehicle (object) are restored from a plurality of "traces (points)" of each vehicle (object).

In an embodiment of the present disclosure, all historic driving traces of all vehicles within the detection range of the sensing unit 110 are optimized. That is, the optimization procedure of FIG. 2B considers the data (object state information) sensed by all sensing units at the same time point.

In an embodiment of the present disclosure, the classifier is trained to generate parameters using all history driving traces. Then, the classifier predicts the moving direction according to the generated parameters. Therefore, in an embodiment of the present disclosure, current traces are determined with reference to all history driving traces. The classifier considers a number of continuous points (objects) and then predicts the moving direction in a real-time manner.

In an embodiment of the present disclosure, when determining whether to warn a vehicle (such as the vehicle V2 of FIG. 3A to FIG. 3C), the history driving traces of the target vehicle are taken into consideration, meanwhile, the moving direction of other vehicle (object) is predicted to evaluate the risk of collision. Therefore, the moving direction of other vehicle is predicted with reference to all history driving traces. For example, vehicles A and B go straight in parallel with vehicle A driving on the left lane and vehicle B driving on the right lane. When the classifier predicts that the vehicle A is likely to turn right, collision prediction shows that the vehicle B going straight is at risk and the vehicle A turning right will collide in n seconds (that is, in n seconds, the vehicle A may collide with the vehicle B). Under such circumstance, the method of the embodiment of the present disclosure will send an alert to the vehicle B.

According to the cooperative vehicle safety system and method of the embodiment of the present disclosure, training is combined with the local map information and the local traffic sign information, such that the vehicle driving traces may be predicted earlier and more accurately, whether the vehicle will make a turn may be predicted, other drivers may be warned beforehand, and collisions and accidents may be reduced.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A cooperative vehicle safety method, wherein the cooperative vehicle safety method comprises:
collecting a local map information, a local traffic sign information, and a state information of an object, received from at least one sensing unit (110), by a roadside unit (120);
optimizing the received state information of the object;
predicting a moving direction of the object according to the optimized state information, a plurality of history driving traces of the object, a plurality of vehicle driving trace patterns, the local map information, and the local traffic sign information; and
determining whether to send an alert according to the predicted moving direction of the object.

2. The cooperative vehicle safety method according to claim 1, wherein,
the state information of the object comprises a relative position of the object, and/or a speed of the object and/or a moving direction of the object;
the roadside unit converts the relative position of the object into a set of earth coordinates of the object;
the local map information is transmitted to the roadside unit by a server or the local map information is built in the roadside unit; and
the local traffic sign information comprises: a local traffic sign phase information and/or a local traffic sign timing information.

3. The cooperative vehicle safety method according to claim 1 or 2, wherein, the process of optimizing the received state information of the object comprises:
smoothing and correcting the received state information of the object; and
filtering noises off the received state information of the object to avoid double collection of the state information of the same object.

4. The cooperative vehicle safety method according to anyone of the claims 1 to 3, further comprising:
identifying the vehicle driving trace patterns from a plurality of history driving traces and providing the identified vehicle driving trace patterns to the roadside unit.

5. The cooperative vehicle safety method according to anyone of the claims 1 to 4, wherein, the roadside unit performs point-to-point restoration on data sensed by the sensing unit according to time and an object number to obtain a plurality of traces of the object; and the roadside unit restores the history driving traces of the object from the traces of the object.

6. The cooperative vehicle safety method according to anyone of the claims 1 to 5, wherein, all history driving traces of all objects within a detection range of the sensing unit are optimized during optimization, and the method further comprising: training a classifier to generate at least one parameter by the roadside unit by using all history driving traces of all objects, wherein the classifier further predicts the moving direction of the object by using the at least one parameter.

7. The cooperative vehicle safety method according to anyone of the claims 1 to 6, wherein, when determining whether to send the alert, the roadside unit further predicts respective moving direction of other objects according to the history driving traces of the object to evaluate collision risk.

8. A cooperative vehicle safety system (100), wherein the cooperative vehicle safety system comprises:
at least one sensing unit (110) configured to sense an object to generate a state information of an object; and
a roadside unit (120) configured to communicate with the at least one sensing unit to collect a local map information, a local traffic sign information, and the state information of the object, received from the at least one sensing unit;
wherein,
the roadside unit predicts a moving direction of the object according to an optimized state information of the object, a plurality of history driving traces of the object, a plurality of vehicle driving trace patterns, the local map information, and the local traffic sign information; and
the roadside unit determines whether to send an alert according to the predicted moving direction of the object.

9. The cooperative vehicle safety system according to claim 8, wherein,
the object state information comprises a relative position of the object and/or a speed of the object and/or a moving direction of the object;
the roadside unit converts the relative position of the object into a set of earth coordinates of the object;
the local map information is transmitted to the roadside unit by a server or the local map information is built in the roadside unit; and
the local traffic sign information comprises a local traffic sign phase information and/or a local traffic sign timing information.

10. The cooperative vehicle safety system according to claim 8 or 9, wherein,
when optimizing the received state information of the object, the received state information of the object is smoothed and corrected; and
noise filtering is performed on the state information of the object to avoid the state information of the same object from being double collection.

11. The cooperative vehicle safety system according to anyone of the claims 8 to 10, wherein,
the vehicle driving trace patterns are identified from a plurality of history driving traces and are provided to the roadside unit.

12. The cooperative vehicle safety system according to anyone of the claims 8 to 11, wherein, the roadside unit performs point-to-point restoration on data sensed by the at least one sensing unit according to time and an object number to obtain a plurality of traces of the object; and the roadside unit restores the history driving traces of the object from the traces of the object.

13. The cooperative vehicle safety system according to anyone of the claims 8 to 12, wherein,
when performing optimization, the roadside unit optimizes all history driving traces of all objects within a detection range of the at least one sensing unit; and
the roadside unit trains a classifier by using all history driving traces of all objects to generate at least one parameter, and the classifier predicts the moving direction of the object by using the at least one parameter.

14. The cooperative vehicle safety system according to anyone of the claims 8 to 13, wherein, when determining whether to send the alert, the roadside unit predicts respective moving direction of other objects according to the history driving traces of the object to evaluate collision risk.
